Europäisches Patentamt

European Patent Office

Office européen des brevets

(19)

(11) Veröffentlichungsnummer: **0 047 960**
**B1**

# EUROPÄISCHE PATENTSCHRIFT

(12)

(45) Veröffentlichungstag der Patentschrift:
**29.01.86**

(21) Anmeldenummer: **81107044.0**

(22) Anmeldetag: **07.09.81**

(51) Int. Cl.⁴: **G 02 B 6/24**, C 03 B 37/075

(54) Verfahren zur Herstellung von Verteiler- und Mischerelementen für die optische Nachrichtentechnik.

(30) Priorität: **17.09.80 DE 3035089**

(43) Veröffentlichungstag der Anmeldung:
**24.03.82 Patentblatt 82/12**

(45) Bekanntmachung des Hinweises auf die Patenterteilung:
**29.01.86 Patentblatt 86/5**

(84) Benannte Vertragsstaaten:
**FR GB**

(56) Entgegenhaltungen:
**EP - A - 0 038 949**
**DE - A - 2 617 096**
**DE - A - 2 729 008**
**DE - A - 2 812 346**
**DE - A - 2 923 093**

**Electronics Letters, Vol. 16, No. 4, 14 February 1980, Seiten 136-138**
**IBM TECHNICAL DISCLOSURE BULLETIN Band 24, Nr. 3, August 1981 M. JOHNSON "Optical Components by Fiber Pulling" Seiten 1539 und 1540**

(73) Patentinhaber: **Siemens Aktiengesellschaft, Berlin und München Wittelsbacherplatz 2, D-8000 München 2 (DE)**

(72) Erfinder: **Aulich, Hubert, Dr., Schwarzstrasse 3, D-8000 München 80 (DE)**
Erfinder: **Eisenrith, Karl-Heinz, Triftstrasse 1, D-8162 Schliersee (DE)**

**Beschreibung**

Die vorliegende Erfindung bezieht sich auf ein Verfahren zur Herstellung von Verteiler- und Mischerelementen für die optische Nachrichtentechnik, bei denen mindestens zwei Glasfaser-Lichtwellenleiter streckenweise miteinander verschmolzen sind.

In Appl. Optics 15 (1976) Seite 2629 ist von M.K. Barnowski et al bereits ein Verteilerelement vorgeschlagen worden, das aus zwei Multimode-Glasfasern besteht, die über eine Länge von einigen Zentimetern mit Hilfe eines $CO_2$-Lasers verschmolzen wurden. Schwierigkeiten bereiten jedoch bei dieser Art der Herstellung die Reproduzierbarkeit der Koppelverhältnisse und die Kontrolle des Schmelzprozesses.

Die Aufgabe der Erfindung besteht darin, ein Verfahren der eingangs genannten Art anzugeben, mit dem Koppelstrecken und Koppelverhältnisse ausgezeichnet reproduzierbar und bei dem der Schmelzprozess gut kontrollierbar ist.

Diese Aufgabe wird durch die im kennzeichnenden Teil des Patentanspruchs 1 angegebenen Merkmale gelöst.

Der wesentliche Vorteil dieser Lösung liegt darin, dass bei einer gegenüber den eigentlichen Elementen erheblich grösseren Vorform der Schmelzprozess erheblich genauer gesteuert werden kann und Koppelverhältnisse sehr genau vorausbestimmt werden können.

Ein besonders einfaches und genaues Verfahren zur Herstellung einer Vorform, aus der nach Anspruch 1 Verteiler- und Mischerelemente herstellbar sind, geht aus Anspruch 2 hervor.

Wie vorteilhaft eine scharf abgegrenzte Heizzone erzeugbar ist, kann den Ansprüchen 3 bis 5 entnommen werden.

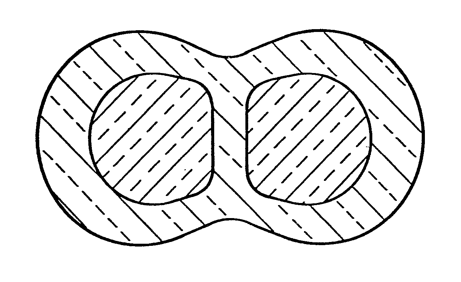

Die Erfindung wird in der nun folgenden Beschreibung und an Hand der Figur näher erläutert.

Die Figur zeigt einen Querschnitt durch ein nach einem vorgeschlagenen Verfahren aus zwei Kern-Mantel-Glasfasern hergestelltes Verteiler- bzw. Mischerelement in der Koppelstrecke, in der die Glasfasern miteinander verschmolzen sind.

Zur Herstellung des in der Figur im Querschnitt dargestellten Elements wird von einer Vorform ausgegangen, die aus zwei Lichtleitstäben besteht, die an verschiedenen Stellen entlang ihrer Längsachse in scharf abgegrenzten Bereichen von beispielsweise 1 bis 2 mm Länge miteinander verschmolzen sind. Diese Vorform wird in einer Faserziehanlage zum Ziehen von Fasern aus Lichtleitstäben dünn gezogen. Solche Ziehanlagen sind allgemein bekannt. In einer solchen Anlage wird die Vorform von einer Halterung so gehalten, dass das untere Ende der Lichtleitstäbe sich in einer Heizzone befindet, in der das Glas geschmolzen wird. Eine solche Heizzone wird in der Regel von einem induktiv beheizten, ringförmigen Heizkörper, beispielsweise einem Kohlesuszeptor erzeugt. Die Heizzone befindet sich dabei im Inneren des ringförmigen Heizkörpers. Von dem geschmolzenen Ende der Stäbe werden beispielsweise mittels einer C-Trommel eine oder

zwei Fasern abgezogen, je nachdem ob am unteren Ende die Lichtleitstäbe verschmolzen sind oder nicht. Ein Vorschubmechanismus sorgt dafür, dass das in der Heizzone befindliche untere Ende der sich während des Ziehvorgangs langsam verkürzenden Vorform stets in dieser Heizzone bleibt. Das aus einer solchen Vorform gezogene Fasergebilde besteht abschnittsweise aus einer Einzelfaser, genauer aus einer verschmolzenen Doppelfaser, und aus zwei getrennten Fasern. Die verschmolzene Doppelfaser bildet eine Koppelstrecke. Einzelne Verteiler- bzw. Mischerelemente können einfach so hergestellt werden, dass das besagte Fasergebilde zwischen Koppelstellen durchtrennt wird. Ein solches Element weist dann freie Faserenden auf, die das Ein- und Auskoppeln der optischen Signale erleichtern.

Das besagte Fasergebilde bzw. die Verteiler- bzw. Mischerelemente können aus Mehrkomponentenglas, beispielsweise Bleiglas oder Quarzglas, hergestellt werden. Die Vorform aus Lichtleitstäben lässt sich sehr einfach so herstellen, dass die Lichtleitstäbe aus Mehrkomponentenglas beispielsweise durch einen 2 mm starken Platindraht lokal verschmolzen werden, der durch Widerstandsheizung auf eine Temperatur von etwa 1100°C gebracht wird. Bei Verwendung von Quarzglasstäben kann das Verschmelzen, z.B. mit einem $CO_2$-Laser oder mit einem Knallgasbrenner mit scharf abgegrenzter Heizzone erfolgen.

In der Figur ist in 600-facher Vergrösserung der Querschnitt durch ein auf vorstehende Weise hergestelltes Verteiler- bzw. Mischerelement im Bereich der Koppelstrecke dargestellt. Dieses Element wurde aus zwei in periodischen Abständen verschmolzenen Kern-Mantel-Lichtleitstäben aus Bleiglas gezogen. Die Lichtleitstäbe hatten einen Durchmesser von 6 mm und waren jeweils auf einer Länge von 2 mm miteinander verschmolzen. Aus dieser Vorform wurde ein etwa 20 m langes Fasergebilde gezogen. Mit dünneren Lichtleitstäben und kürzeren Verschmelzungsbereichen lässt sich die Länge von Koppelstrecken wesentlich verkürzen. Das Koppelverhältnis lässt sich durch die Stärke des Fasermantels bzw. des Mantels der Lichtleitstäbe variieren. In der Figur bedeuten die von links unten nach rechts oben schraffierten Bereiche die Kernbereiche der Doppelfaser, während der von links oben nach rechts unten schraffierte Bereich den gemeinsamen Mantel der Doppelfaser bedeuten. Die Umrisse der Kerne und des gemeinsamen Mantels entsprechen genau den Umrissen eines aufgenommenen Querschnitts der Doppelfaser.

**Patentansprüche**

1. Verfahren zur Herstellung von Verteiler- und Mischerelementen für die optische Nachrichtentechnik, bei denen mindestens zwei Glasfaser-Lichtwellenleiter streckenweise miteinander verschmolzen sind, dadurch gekennzeichnet, dass eine Vorform gefertigt wird, die aus mindestens zwei derart miteinander verschmolzenen Lichtleitglasstäben besteht, dass die Stäbe der Vorform aufeinanderfolgende Längsbereiche aufweisen, die abwechselnd miteinander verschmolzen und nicht verschmolzen sind, und dass diese Vorform dünn gezogen wird, so dass auch das entstehende Fasergebilde aus abwechselnd miteinander verschmolzenen und nicht verschmolzenen Fasern besteht, woraus dann durch Durchtrennen die Verteiler- bzw. Mischerelemente erhalten werden.

2. Verfahren nach Anspruch 1, dadurch gekennzeichnet, dass zur Herstellung der Vorform die gebündelten Lichtleitglasstäbe in einer scharf abgegrenzten Heizzone miteinander verschmolzen werden.

3. Verfahren nach Anspruch 2, dadurch gekennzeichnet, dass die Lichtleitglasstäbe mit einem Heizdraht miteinander verschmolzen werden.

4. Verfahren nach Anspruch 2 oder 3, dadurch gekennzeichnet, dass die Lichtleitglasstäbe mit einem Laser miteinander verschmolzen werden.

5. Verfahren nach Anspruch 2, 3 oder 4, dadurch gekennzeichnet, dass die Lichtleitglasstäbe mit einem Knallgasbrenner mit scharf begrenzter Heizzone miteinander verschmolzen werden.

## Claims

1. A method of manufacturing branching and mixing elements for optical communications, in which elements at least two glass fibre light waveguides are fused to one another in sections, characterised in that a preliminary mould is formed which comprises at least two photoconductive glass rods which are fused to one another in such a manner that the rods of the preliminary mould have consecutive longitudinal regions which are alternately fused and not fused to one another, and that the preliminary mould is thinly drawn, so that the resulting fibre structure likewise comprises fibres which are alternately fused and not fused to one another, from which the branching and mixing elements are then obtained by separating.

2. A method as claimed in Claim 1, characterised in that for the manufacture of the preliminary mould the bunched photoconductive glass rods are fused to one another in a sharply defined heating zone.

3. A method as claimed in Claim 2, characterised in that the photoconductive glass rods are fused to a heating wire.

4. A method as claimed in Claim 2 or 3, characterised in that the photoconductive glass rods are fused to a laser.

5. A method as claimed in Claim 2, 3 or 4, characterised in that the photoconductive glass rods are fused to an oxy-hydrogen burner with a sharply defined heating zone.

## Revendications

1. Procédé pour la fabrication d'éléments distributeurs et mélangeurs pour la technique optique de communications, dans lesquels au moins deux guides d'ondes de lumière constitués par des fibres de verre sont, par sections, soudés par fusion entre eux, caractérisé par le fait que l'on prépare une ébauche qui est constituée par deux tiges de verre guidant la lumière, qui sont soudées entre elles par fusion de telle façon que les tiges de l'ébauche présentent des zones longitudinales successives qui sont alternativement soudées par fusion et non soudées par fusion entre elles et que cette ébauche est étirée avec amincissement de la section transversale de manière que la structure à fibres soit constituée alternativement par des fibres soudées entre elles par fusion et par des fibres non soudées entre elles par fusion, et à partir de laquelle sont obtenus, par sectionnement, les éléments distributeurs ou mélangeurs.

2. Procédé suivant la revendication 1, caractérisé par le fait que pour fabriquer l'ébauche les tiges de verre guidant la lumière, assemblées en faisceaux, sont soudées entre elles par fusion dans une zone nettement délimitée.

3. Procédé selon la revendication 2, caractérisé par le fait que les tiges de verre guidant la lumière sont soudées entre elles par fusion à l'aide d'un fil chauffant.

4. Procédé selon la revendication 2 ou 3, caractérisé par le fait que les tiges de verre guidant la lumière sont soudées entre elles par fusion à l'aide d'un laser.

5. Procédé selon l'une des revendications 2, 3 ou 4, caractérisé par le fait que les tiges de verre guidant la lumière sont soudées entre elles par fusion, à l'aide d'un chalumeau oxhydrique à zone de chauffage nettement délimitée.

0 047 960

1/1

5